# EUROPÄISCHE PATENTSCHRIFT

(11) **EP 0 520 191 B1**
(45) Veröffentlichungstag und Bekanntmachung des Hinweises auf die Patenterteilung: **13.03.1996**
(21) Anmeldenummer: 92108605.4
(22) Anmeldetag: 21.05.1992
(51) Int. Cl.: H02K 5/14, H02K 11/00, H02K 23/66, H02K 5/22

(54) **Bürstenbrücke für einen Gleichstrom-Permanentmagnetmotor**
Brush gear for a direct-current permanent-magnet motor
Ensemble de porte-balais pour un moteur à courant continu et à aimants permanents

(30) Priorität: 27.06.1991 DE 4121202
(43) Veröffentlichungstag der Anmeldung: 30.12.1992
(73) Patentinhaber: Licentia Patent-Verwaltungs-GmbH, D-60596 Frankfurt (DE)
(72) Erfinder: Schmidt, Andreas, W-2900 Oldenburg (DE)
(74) Vertreter: Vogl, Leo, Dipl.-Ing.

(56) Entgegenhaltungen:
- EP-A- 0 105 392
- EP-A- 0 258 132
- DE-U- 8 800 543
- FR-A- 2 454 202
- US-A- 4 673 837

## Beschreibung

Die Erfindung betrifft eine Bürstenbrücke für einen Gleichstrom-Permanentmagnetmotor der im Oberbegriff des Patentanspruchs 1 angegebenen Art.

Es sind schon Bürstenbrücken bekannt, bei denen die Lagerplatte aus elektrisch isolierendem Material und die Bürstenführungen aus Metall bestehen. Die Plus-Bürsten sind hierbei durch ein isoliertes Verbindungskabel verbunden, dessen Enden mit Anschlußteilen versehen und an die zugehörigen Bürstenteile geschraubt sind. Die Andruckfedern sind als Spiralfedern ausgebildet und wirken über einen zugeordneten schwenkbaren Hebel auf die jeweilige Bürste ein, die lediglich am Bürstenhalter geführt ist. Derartige Bürstenhaltevorrichtungen sind durch ihre Vielzahl von Einzelteilen nicht mehr für eine wirtschaftliche automatische Großserienfertigung geeignet. Außerdem gewährleistet diese bekannte Bürstenhaltevorrichtung keine ausreichend schüttelfeste Führung der Bürsten.

Aus der DE-OS 14 63 897 ist ein Kollektormotor bekannt, bei dem der Bürstenhalter ebenfalls mehrteilig aufgebaut ist. Insbesondere ist aber bei diesem Kollektormotor fertigungstechnisch von ganz erheblichem Nachteil, daß ein Teil des Bürstenhalters durch das Motorgehäuse selbst gegeben ist, was die Flexibilität bei der Montage und beim Austausch von Verschleißteilen ganz erheblich beeinträchtigt.

Auch sind bekannte Bürstenbrücken für zweipolige Gleichstrom-Permanentmagnetmotoren in Spritzgußtechnik bekannt, wobei die Bauteile in einer Ebene auf der Bürstenplatte befestigt sind. Hierbei ist die Konzentration von Wärmequellen auf einen Bereich beschränkt.

Weiterhin ist durch die DE-OS 27 01 161 eine Bürstenbrücke mit einer aus Isolierstoff bestehenden Trägerplatte bekannt, auf deren erster Seite Kohleführungen, eine Drosselspule und Anschlußschlußfahnen angeordnet sind. Die Kohleführungen weisen durch die Trägerplatte hindurchgesteckte Krallen auf. Zwischen den Krallen und der zweiten Seite der Trägerplatte sind Haltebleche mit quer verlaufenden Vorsprüngen eingefügt. Die Vorsprünge ragen durch die Trägerplatte hindurch und tragen Spiralfedern zum elastischen Andrücken von in den Kohleführungen verschiebbaren Kohlebürsten an den Kommutator des Kleinstmotors. Ein weiterer Vorsprung dient als Anschlußfahne, beispielsweise zur Herstellung einer Steckverbindung, über die der Strom zu einer zugeordneten Kohlebürste geführt wird. Die Haltebleche weisen auf der zweiten Seite der Trägerplatte einstückig angeformte, U-artig gestaltete Taschen auf. Das Zuführen der genannten Teile zu beiden Plattenseiten ist umständlich und erfordert für einen automatisierten Zusammenbau sehr komplizierte und teure Vorrichtungen und zudem nachteilig lange Montagezeiten.

Durch die DE-U-88 00 543 ist eine Endkappe für einen Elektromotor bekannt, die eine Innenseite und eine Außenseite aufweist und mit Anschlüssen für die Verbindung des Motors mit einer elektrischen Energiequelle versehen ist. Die Endkappe weist an der Innenseite Bürstenführungen auf, die mit den jeweiligen Anschlüssen elektrisch verbunden sind. Ein mit dem Motorgehäuse in wärmeleitender Verbindung stehender Widerstand ist hierdurch nicht bekannt. Eine derartige Anordnung des Widerstandes ist auch nicht weder der EP 258 132 A1 noch der US 4,673,837 zu entnehmen.

Der Erfindung liegt die Aufgabe zugrunde, eine Bürstenbrücke gattungsgemäßer Art in dem Sinne weiterzubilden, daß sie preisgünstiger fertigbar und hinsichtlich ihrer Montage bzw. im Austausch im Zuge von Wartungsarbeiten, spürbar einfacher handhabbar ist, wobei die Funktionssicherheit für lange Wartungszeiten gewährleistet sein soll. Diese Aufgabe wird bei einer Bürstenbrücke der eingangs genannten Art durch die im Patentanspruch 1 gekennzeichneten Merkmale gelöst.

Durch die Erfindung ist somit eine preisgünstig fertigbare und eine einfach handhabbare Bürstenbrücke hoher Funktionsfähigkeit geschaffen. Diese Bürstenbrücke hat den Vorteil, daß die mit der Tragplatte zu vereinigenden und unter sich elektrisch zu verbindenden Bauelemente, wie Drossel, Bürstenführung und als Steckverbindungen ausgebildete Anschlußmittel in technisch einfacher und zeitsparend durchführbarer Weise nur von einer Seite der Trägerplatte zugeführt zu werden brauchen. Dadurch wird ein Ausschuß wirksam vermieden. Die elektrischen Steckverbinder weisen eine hohe mechanische Festigkeit auf und bewirken ein dauerhaft zuverlässiges Arbeiten des Gleichstrom-Permanentmagnetmotors.

Außerdem gewährleistet die Bürstenbrücke eine gleichmäßige Lageverteilung in Bezug auf Abfuhr der in den Drosseln entstehenden Stromwärme sowie den erforderlichen Abstand zu den stromdurchflossenen Spulen der Läuferwicklung wegen elektromagentischer Beeinflussung.

Durch die in den weiteren Unteransprüchen aufgeführten Maßnahmen sind vorteilhafte Weiterbildungen und Verbessereungen der im Hauptanspruch angegebenen Bürstenbrücke möglich.

Die Erfindung wird anhand eines Ausführungsbeispiels im folgenden näher beschrieben. Es zeigt:

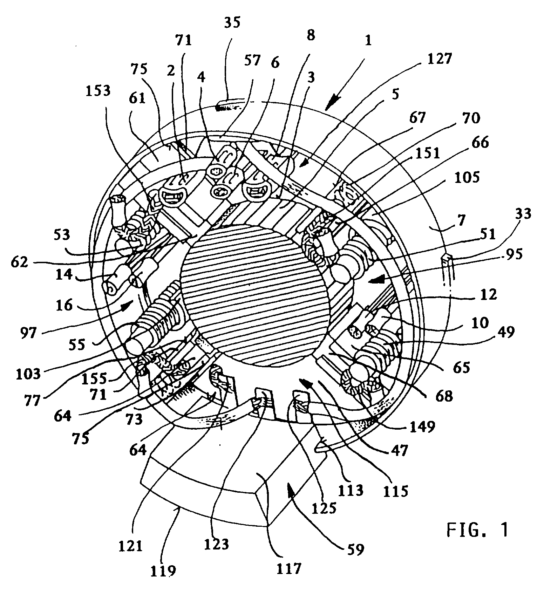

- Figur 1: ein schaubildliche Darstellung auf die Bürstebrücke mit den elektrischen Bauelementen,

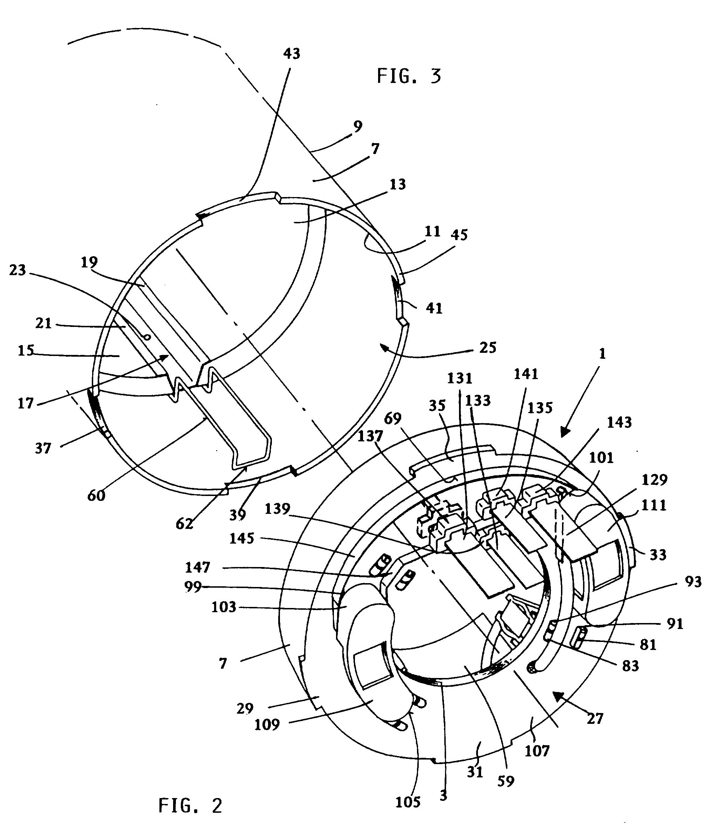

- Figur 2: eine schaubildliche Darstellung auf die Oberseite der Bürstenbrücke und
- Figur 3: Motorgehäuse mit Permanentmagneten.

Die Bürstenbrücke hat eine topfförmige Trägerplatte 1, die aus elektrisch isolierendem Kunststoff geformt ist. Die Trägerplatte 1 hat eine Mittelbohrung 3, durch welche ein Kommutator 5 eines Rotors eines nicht näher dargestellten Gleichstrom-Permanentmagnetmotors ragt. Mit ihrer zylindrischen Umfangsfläche 7 ist die Trägerplatte 1 begrenzt in ein zylindrisches Motorgehäuse 9 mit an dessen inneren Umfangsfläche 11 angeordneten Permanentmagneten 13, 15 einschiebbar, welche mittels einer Halteplatte 17 mit Anschlagflächen 19, 21 gegen die innere Umfangsfläche preßbar sind. Diese Halteplatte 17 wird durch Schrauben 23 an dem Motorgehäuse 9 fixiert. Das Einschieben der Trägerplatte 1 in die Öffnung 25 des Motorgehäuses 9 wird dadurch begrenzt, daß die Bodenplatte 27 gegenüber der Umfangsfläche 7 radial vorstehende Anschlagnasen 29, 31, 33, 35 aufweist, welche mit entsprechend ausgebildeten Ausnehmungen 37, 39, 41, 43 in einer Stirnseite 45 des Motorgehäuses 9 in formschlüssiger Anlage stehen. Der Außendurchmesser der Umfangsfläche 7 und der Innendurchmesser des Gehäuses 9 sind so gewählt, daß hierbei ein strammer Lagersitz erzielt wird. Die vorstehenden Anschlagnasen 29, 31, 33, 35 weisen Längen auf, welche der Wandstärke des Motorgehäuses 9 entsprechen.

Auf der inneren Bodenfläche 47 der Bodenplatte 27 sind Halterungselemente für eine gleichmäßige Verteilung aller Wärme erzeugenden elektrischen Bauelemente wie Drosseln 49, 51, 53, 55, Kondensator 57, Widerstand 59 sowie von Festkontakten. Hierbei sind vier zentrisch zu der Mittelbohrung 3 und um 90 Grad zueinander versetzt angeordnete Bürstenführungen 61, 63, 65, 67 für Kohlebürsten 62, 64, 66, 68 auf der inneren Bodenfläche 47 angeordnet, welche im wesentlichen rechteckförmig ausgebildet sind. Die Arretierung dieser Bürstenführungen 61, 63, 65, 67 auf der Bodenfläche 47 erfolgt über je zwei von der inneren Umfangsfläche 69 der Trägerplatte 1 bis zu der Mittelbohrung 3 reichende, parallel angeordnete Führungskanten 71, 73, gegen die Gegenanschlagkanten 75, 77 der Bürstenführungen 61, 63, 65, 67 formschlüssig anliegen. Die Bürstenführungen 61, 63, 65, 67 bestehen aus Metall wie Messing oder Zarmak und weisen an der als Lagerfläche dienenden Unterseite 79 Krallen 81, 83 auf, welche durch Öffnungen in der Bodenplatte 47 hindurchragen und deren freien Enden mit Krallen 85, 87 versehen sind. Diese Krallen 85, 87 sind hinter an der Unterseite 89 der Bodenplatte 27 angeordnete Raststege 91, 93 verankert. Hierdurch werden die Bürstenführungen 61, 63, 65, 67 mit der Trägerplatte 1 sicher fest verbunden. Die in den Bürstenführungen 61, 63, 65, und 67 gelagerten Kohlebürsten 62, 64, 66, 68 werden durch Druckfedern 70 sicher mit dem Kommutator 5 in Kontakt gehalten. Hierdurch wird eine kompakte Lagerung für die Kohlebürsten 62, 64, 66, 68 geschaffen.

In zwei gegenüberliegenden Zwischenräume 95, 97 zwischen den Bürstenführungen 61 und 63 bzw. 65 und 67 sind jeweils zwei Drosselspulen 53 und 55 bzw. 49 und 51 in Halterungen senkrecht zu der Bodenfläche 47 angeordnet. Zu diesem Zweck weisen die beiden Zwischenräume 95, 97 je eine konzentrisch zu der Umfangsfläche 7 der Trägerplatte 1 angeordnete langlochartige Ausnehmungen 99, 101 auf, welche bis an die inneren Führungsstege 71, 73 von je zwei Bürstenführungen 61 und 63 bzw. 65 und 67 reichen. In den Enden dieser Ausnehmungen 99, 101 sind halbkreisförmige Aufnahmen 103, 105 für die Drosselspulen 49, 51, 53, 55 angeordnet, die gegenüber der inneren Bodenfläche 47 und der Bodenaußenseite 107 soweit vorstehen, daß die Enden der Festkontakte 2, 4, 6, 8, 10, 12, 14, 16 und der Drosseln 49, 51, 53, 55 in einer Ebene liegen. Die Öffnungen von zwei halbkreisförmigen Aufnahmen 103, 105 sind jeweils einander zugewandt angeordnet, wobei die freien Enden auf der Bodenaußenseite 107 durch eine gemeinsame Bodenplatte 109, 111 verschlossen sind. Hierdurch wird eine effektive Bauraumausnutzung durch raumsparende Anordnung der Entstörelemente wie der Drossel 49, 51, 53, 55 mittels Höhenversetzen in der Trägerplatte 1 erzielt.

Die Trägerplatte 1 weist als Drehzahlregelungselement den Widerstand 59 auf, welcher in einer Ausnehmung 113 in der Umfangsfläche 7 der Trägerplatte 1 angeordnet ist. Diese Ausnehmung 113 befindet sich in dem Zwischenraum 115 zwischen den Bürstenführungen 63 und 65. Der Widerstand 59 hat eine konzentrisch zu der Umfangsfläche 7 ausgebildete Innenfläche 117 und eine entsprechend ausgebildete Außenfläche 119 und hat die Form eines Teiles eines Hohlzylinders mit drei an der Innenseite angeordneten Kontaktanschlüssen 121, 123 und 125. Im eingebauten Zustand der Trägerplatte 1 in dem Motorgehäuse 9 liegt die Außenfläche 119 des Widerstandes 59 an der inneren Umfangsfläche 11 des Motorgehäuses 9 satt an, so daß eine sichere Wärmeableitung gewährleistet wird. Eine sichere Kontaktberührung des Widerstandes 59 mit der inneren Umfangsfläche 11 des Motorgehäuses 9 wird dadurch unterstützt, daß der Widerstand 59 mittels eines U-förmigen Federbügels 60 arretiert und gegen die innere Umfangsfläche 11 gepreßt wird. Im eingebauten Zustand der Trägerplatte 1 rastet eine an dem freien Ende der bügelartigen Feder 60 mit einer Rastnase 62 hinter einer Rastkante 64 an dem Widerstand 59, wodurch die Außenfläche 119 des Widerstandes 59 gegen die innere Umfangsfläche 11 des Gehäuses 9 gepreßt wird.

Schließlich ist in dem Zwischenraum 127 zwischen den Bürstenführungen 61 und 67 noch der Kondensator 57 in Nähe der inneren Umfangsfläche der Tragplatte 1 angeordnet. In diesem Zwischenraum 127 befinden sich auch vier röhrenförmig gequetschte Anschlußstellen 2, 4, 6, 8 von Anschlußfahnen 129, 131, 133, 135, welche in Halterungen 137, 139, 141, 143 selbstrastend gelagert sind. Diese Halterungen 137, 139, 141, 143 sind einstückig mit der Bodenplatte 47 der Trägerplatte 1 ausgebildet und weisen nicht dargestellte Rastkanten in Durchtrittsschlitzen auf, hinter welche Anschlußfahnen 129, 131, 133, 135 bei der Montage mit federnden Nasen verrasten. Diese Halterungen 137, 139, 141, und 143 haben einen T-förmigen Querschnitt und stehen mit ihren Enden sowohl gegenüber der Bodenfläche 47 als auch gegenüber der Außenoberseite 107 der Trägerplatte 1 vor. Die Anschlußfahnen 129, 131, 133, 135 sind also durch eine selbstsichernde Steckverrastung mit der Trägerplatte 1 auf einfachste Weise verbindbar.

In den Zwischenräumen zwischen den Drosseln 51 und 53 bzw. 55 und 57 sind auf jeder Seite der langlochartigen Ausnehmung 99, 101 je ein röhrenförmiges, gequetschtes Anschlußstück 10 und 12 bzw. 14 und 16 gelagert, wobei die elektrischen Verbindungen zwischen den Drosseln 51 und 55 bzw. 53 und 57 und den Bürstenführungen 61 und 65 bzw. 63 und 67 gleicher Polarität durch Leitblechstreifen 145 und 147 bestehen. Diese Leitblechstreifen 145 und 147 ermöglichen ebenfalls eine automatische Montage der elektrischen Bauelemente auf der Trägerplatte 1. Die freien Enden der auf der Bodenfläche 47 der topfförmigen Trägerplatte 1 gelagerten elektrischen Bauelemente wie Drossel, Festkontakte und die die Drosseln mit den Bürsten verbindenden Litze 149, 151, 153 und 155 liegen etwa auf gleicher Höhe, wobei die genannten elektrischen Bauelemente von einer Seite in entsprechende Halterungen montier- und verrastbar sind. Auf der Oberseite 107 der Trägerplatte 1 sind lediglich die Anschlußfahnen 129, 131, 133, 135 und die beiden Leitblechstreifen 145 und 147 angeordnet.

Die Sicherung der elektrischen Bauelemente, insbesondere der Entstörelemente auf der Trägerplatte 1 erfolgt durch angespritzte Halterungen, in welche die Bauteile durch eine selbstsichernde Steckverrastung befestigbar sind. Hierdurch ist eine Anpassung der Bürstenbrücke an unterschiedliche Leistungs- und Ausstattungsanforderungen durch entsprechende Wechseleinsätze im Spritzwerkzeug möglich. Eine Verringerung der verbindungstechnischen Arbeiten unter beengten Platzverhältnissen wird durch getrennt durchführbare Bürstenbrückenbestückung erzielt. Weiterhin zeichnet sich die Bürstenbrücke durch eine gleichmäßige Verteilung der Wärme erzeugenden Bauelemente auf der Bürstenbrücke aus.

## Patentansprüche

1. Bürstenbrücke für einen Permanentmagnetmotor mit einer Trägerplatte (1), auf der mindestens zwei Bürstenführungen (61, 63, 65, 67) mit je einer Kohlebürste (62, 64, 66, 68) befestigt sind, wobei die Kohlebürsten mitttels Federn (70) mit einem Kommutator (5) in Berührung stehen, welcher an einem in einem zylindrischen Motorgehäuse (9) drehbar gelagerten Rotor fest angeordnet ist, wobei die aus einem elektrisch isolierendem Material bestehende Trägerplatte (1) topfförmig ausgebildet und mit ihrer zylindrischen Umfangsfläche (7) in dem zylindrischen Motorgehäuse (9) begrenzt einschiebbar gelagert ist und auf der inneren Bodenfläche (47) der Bodenplatte (27) Halterungselemente für eine gleichmäßige Verteilung von wärmeerzeugenden elektrischen Bauteilen wie Drosseln (49, 51, 53, 55), Kondensator (57), Widerstände (59) sowie von Festkontakten aufweist, **dadurch gekennzeichnet**, daß die Trägerplatte (1) einen in ihrer Umfangsfläche (7) angeordneten Widerstand (59) aufweist, welcher die Form eines Teiles eines Hohlzylinders hat.

2. Bürstenbrücke nach Anspruch 1, **dadurch gekennzeichnet**, daß der äußere Krümmungsradius des Widerstandes (59) dem Krümmungsradius der Umfangsfläche (7) entspricht, derart, daß die Außenfläche (119) des Widerstandes (59) mit der Innenfläche (11) des Motorgehäuses (9) zwecks Wärmeableitung im eingebauten Zustand der Trägerplatte (1) in Kontakt steht.

3. Bürstenbrücke nach Anspruch 1 oder 2, **dadurch gekennzeichnet**, daß die Umfangsfläche (7) der Trägerplatte (1) in dem Zwischenraum (115) zwischen den beiden Bürstenführungen (63, 65) eine Ausnehmung (113) zur Aufnahme des konzentrisch zu der Umfangsfläche (7) ausgebildeten Widerstandes (59) aufweist, welcher auf der Innenseite mit Kontaktanschlüssen (121, 123 und 125) versehen ist.

## Claims

1. Brush gear for a permanent magnet motor with a carrier plate (1), on which at least two brush guides (61, 63, 65, 67) each with a respective carbon brush (62, 64, 66, 68) are fastened, wherein the carbon brushes stand in contact by means of springs (70), with a commutator (5), which is fixedly arranged at a rotor rotatably mounted in a cylindrical motor casing (9), wherein the carrier plate (1) consisting of an electrically insulating material is formed to be pot-shaped and is mounted to be limitedly insertably by its cylindrical circumferential surface (7) into the cylindrical motor casing (9) and has, on the inner base surface (47) of the base plate (27), retaining elements for a uniform distribution of heat-producing electrical components such chokes (49, 51, 53, 55), capacitors (57), resistors (59) as well as of fixed contacts, characterised thereby that the carrier plate (1) has a resistor (59) which is arranged in its circumferential surface (7) and which has the form of a part of a hollow cylinder.

2. Brush gear according to claim 1, characterised thereby that the outer radius of curvature of the resistor (59) corresponds to the radius of curvature of the circumferential surface (7) in such a manner that the outer surface (119) of the resistor (59) stands in contact with the inner surface (11) of the motor casing (9) for the purpose of heat dissipation in the installed state of the carrier plate (1).

3. Brush gear according to claim 1 or 2, characterised thereby that the circumferential surface (7) of the carrier plate (1) has in the intermediate space (115) between the two brush guides (63, 65) a recess (113) for reception of the resistor (59), which is formed concentrically to the circumferential surface (7) and which is provided on the inner side with contact terminals (121, 123 and 125).

## Revendications

1. Porte-balais pour un moteur à aimant permanent comprenant une plaque-support (1) sur laquelle sont fixés au moins deux guide-balais (61, 63, 65, 67) avec chacun un balai à charbon (62, 64, 66, 68), les balais à charbon étant en contact, au moyen de ressorts (70), avec un commutateur (5) qui est fixé sur un rotor logé de manière rotative dans un carter de moteur cylindrique (9), la plaque-support (1) présentant la forme d'un pot, se composant d'une matière électriquement isolante et étant logée, par insertion limitée de sa surface périphérique cylindrique (7), dans le carter de moteur cylindrique (9), plaque-support dont la surface interne de fond (47) de la plaque de fond (27) présente des éléments de fixation pour une répartition régulière des composants électriques générant de la chaleur tels que des bobines de self (49, 51, 53, 55), des condensateurs (57), des résistances (59) et celle de contacts fixes, caractérisé en ce que la plaque-support (1) présente une résistance (59) qui est disposée dans sa surface périphérique (7) et qui a la forme d'une partie d'un cylindre creux.

2. Porte-balais selon la revendication 1, caractérisé en ce que le rayon de courbure externe de la résistance (59) correspond au rayon de courbure de la surface périphérique (7), si bien que la surface externe (119) de la résistance (59) est en contact avec la surface interne (11) du carter de moteur (9) de manière à assurer la dissipation thermique quand la plaque-support (1) est montée.

3. Porte-balais selon la revendication 1 ou 2, caractérisé en ce que la surface périphérique (7) de la plaque-support (1) présente, dans l'espace (115) entre les deux guide-balais (63, 65), une cavité (113) pour le logement de la résistance (59) qui est concentrique à la surface périphérique (7) et qui est munie, sur la face interne, des connexions de contact (121, 123 et 125).
